(19) Europäisches Patentamt
European Patent Office
Office européen des brevets

(11) **EP 4 407 290 B1**

(12) # FASCICULE DE BREVET EUROPEEN

(45) Date de publication et mention de la délivrance du brevet:
**26.03.2025 Bulletin 2025/13**

(21) Numéro de dépôt: **23216016.8**

(22) Date de dépôt: **12.12.2023**

(51) Classification Internationale des Brevets (IPC):
**G01M 13/028** (2019.01)     **G01M 13/045** (2019.01)

(52) Classification Coopérative des Brevets (CPC):
**G01M 13/045; G01M 13/028**

(54) **PROCEDE ET DISPOSITIF DE DETECTION D'UN DEFAUT SUR UN SYSTEME MECANIQUE COMPORTANT AU MOINS UN ORGANE TOURNANT**

VERFAHREN UND VORRICHTUNG ZUR ERKENNUNG EINES FEHLERS IN EINEM MECHANISCHEN SYSTEM MIT MINDESTENS EINEM ROTIERENDEN ELEMENT

METHOD AND DEVICE FOR DETECTING A DEFECT ON A MECHANICAL SYSTEM COMPRISING AT LEAST ONE ROTATING MEMBER

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.01.2023 FR 2300829**

(43) Date de publication de la demande:
**31.07.2024 Bulletin 2024/31**

(73) Titulaire: **Airbus Helicopters
13725 Marignane Cedex (FR)**

(72) Inventeurs:
• **MOREL, Hervé
13100 AIX EN PROVENCE (FR)**
• **JOUVE, Jérémy
13560 SENAS (FR)**
• **HAD, Anas
42300 ROANNE (FR)**

• **ANDRE, Hugo
42300 ROANNE (FR)**
• **EL BADAOUI, Mohamed
42153 RIORGES (FR)**

(74) Mandataire: **GPI Brevets
1330, rue Guillibert de la Lauzière
EuroParc de Pichaury
Bât B2
13856 Aix en Provence Cedex 3 (FR)**

(56) Documents cités:
**CN-A- 102 426 102     FR-A1- 3 014 502**

• **SAMUEL P D ET AL: "A review of vibration-based techniques for helicopter transmission diagnostics", JOURNAL OF SOUND AND VIBRATION, ELSEVIER, AMSTERDAM , NL, vol. 282, no. 1-2, 6 April 2005 (2005-04-06), pages 475 - 508, XP004781904, ISSN: 0022-460X, DOI: 10.1016/J.JSV.2004.02.058**

**EP 4 407 290 B1**

# EP 4 407 290 B1

**Description**

**La présente** invention se situe dans le domaine des systèmes de surveillance du fonctionnement des systèmes mécaniques, en particulier des systèmes mécaniques comportant au moins un organe tournant.

La présente invention concerne un procédé de détection d'un défaut sur un système mécanique comportant au moins un organe tournant ainsi qu'un dispositif de détection d'un défaut configuré pour mettre en œuvre un tel procédé.

Un tel système mécanique comporte au moins un organe tournant, par exemple un arbre d'entrée et/ou un arbre de sortie. Par souci de simplification, un système mécanique comportant au moins un organe tournant est désigné par la suite par l'expression « système mécanique ».

Par exemple, un système mécanique peut comporter un ou des paliers afin de guider en rotation un ou des organes tournants. Un palier comporte, par exemple, un roulement muni d'une ou de plusieurs rangées d'éléments roulants tels que des billes, des rouleaux ou autres.

Un tel système mécanique peut être aussi muni d'au moins une roue dentée, un pignon, une couronne dentée afin de fournir une réduction ou une augmentation de la vitesse de rotation entre deux organes tournants du système mécanique, notamment entre un arbre d'entrée et un arbre de sortie.

Un tel système mécanique peut par exemple être muni d'un train épicycloïdal d'engrenages permettant de fournir un grand rapport de réduction de la vitesse de rotation entre deux organes tournants du système mécanique.

Un tel système mécanique peut par exemple être une boîte de vitesse ou une boîte de transmission de puissance d'un véhicule, notamment d'un aéronef.

Une panne ou un dysfonctionnement d'un tel système mécanique peut intervenir, par exemple, consécutivement à l'apparition d'un défaut sur un palier, en particulier un roulement, et/ou sur une roue dentée, un pignon, une couronne dentée. Un tel défaut peut par exemple prendre la forme d'une crique, d'un écaillage, d'une fissure, voire une rupture, sur une roue dentée, un pignon, une couronne dentée ou un palier. Un tel défaut peut aussi prendre la forme d'un grippage d'un élément roulant.

Certains systèmes de surveillance désignés par l'acronyme *HUMS* pour « Health and Usage Monitoring System » en langue anglaise ont pour but de surveiller un ou plusieurs systèmes mécaniques par l'intermédiaire de différents capteurs en suivant l'évolution d'un ensemble d'indicateurs de surveillance. Ces indicateurs de surveillance sont calculés à partir des mesures d'un ou de plusieurs capteur(s) afin de caractériser l'état et le fonctionnement de chaque système mécanique. Par exemple, un indicateur de surveillance peut être défini par un signal fourni par un capteur ou en combinant les signaux de plusieurs capteurs. Plusieurs indicateurs de surveillance peuvent également exploiter les mesures issues d'un seul et même capteur à travers diverses caractéristiques du signal fourni par ce capteur, tel son spectre temporel ou fréquentiel.

L'évolution de chaque indicateur de surveillance peut être comparée à un seuil de détection afin de détecter ou d'anticiper un éventuel défaut ou une panne du système mécanique surveillé. La valeur de chaque seuil de détection peut être obtenue par l'expérience, par une analyse statistique d'un historique de mesures issues de plusieurs systèmes mécaniques similaires ou bien par un apprentissage individuel sur un système mécanique donné.

Un indicateur de surveillance peut prendre la forme d'un indicateur vibratoire évalué à l'aide d'un capteur comportant au moins un accéléromètre, un tachymètre ou une jauge de contrainte par exemple. Un tel indicateur de surveillance peut dans ce cas être égal à l'amplitude maximale d'un signal vibratoire temporel fourni par un accéléromètre par exemple.

Pour un signal vibratoire variant dans le domaine temporel, un indicateur peut être déterminé à partir de fonctions statistiques telles que la moyenne quadratique, le facteur de crête, le coefficient d'asymétrie ou le coefficient d'aplatissement d'une distribution par exemple.

Pour un signal vibratoire exprimé dans le domaine fréquentiel, un indicateur peut être déterminé à partir de la fréquence moyenne ou de la fréquence de déviation standard.

D'autres indicateurs peuvent être construits à partir de décompositions du signal en temps et en fréquence telles que la transformée en ondelettes, la décomposition en mode empirique ou la transformée de Fourier à court-terme par exemple.

La plupart de ces indicateurs sont calculés à partir de prétraitements effectués sur un signal brut mesuré par un capteur afin d'éliminer ou de réduire significativement le bruit et/ou les fluctuations de la vitesse des composants surveillés. Parmi ces prétraitements, tels qu'un ré-échantillonnage angulaire, des calculs de la moyenne synchrone et de la variance synchrone peuvent aussi être utilisés, avec pour objectif d'atténuer certaines composantes du signal brut telles que par exemple une composante aléatoire et/ou un bruit.

Les publications « A Review of Vibration Based Technique for Helicopter Transmission Diagnostics » de Samuel P.D (Journal of sound and vibration, 2005), « A Review on Vibration-Based Condition Monitoring of Rotating Machinery » de Monica Tiboni (Department of Mechanical and Industrial Engineering, University of Brescia,2022) et « Cepstrum Analysis and Gearbox Fault Diagnosis » de R.B. Randall (Bruel & Kjaer) décrivent des méthodes d'analyse de signaux vibratoires mesurés sur des machines tournantes munies d'engrenages permettant d'établir des diagnostics de ces machines et de déterminer la présence éventuelle de défauts.

En outre, le document CN 102426102 décrit un procédé destiné à détecter l'apparition d'une fissure sur un arbre de transmission portant un engrenage par analyse d'un signal vibratoire mesuré à proximité de l'engrenage et d'un signal comportant une information relative à la vitesse de rotation de l'arbre de transmission.

Le document FR 3014502 décrit un procédé et un dispositif de détection de défauts mécaniques dans une machine tournante à régime variable utilisant des signatures vibratoires générées par différentes plages de vitesses à partir de signaux de mesure issus de capteurs de vibrations équipant des composants non tournants de la machine pendant plusieurs cycles de fonctionnement. Ces signatures vibratoires sont ensuite comparées avec une signature vibratoire de référence établie pour chaque capteur de vibrations dans un mode sans défaut de la machine tournante.

L'élaboration d'un système de détection de défauts sensible et robuste est essentielle pour prévenir les défaillances catastrophiques des systèmes de transmission de puissance, en particulier pour les aéronefs. Toute amélioration de la détection de l'apparition de défaut dans un système de transmission de puissance améliore sensiblement la sécurité.

L'art antérieur fait état du suivi de fréquences liées à un défaut, fréquences connues à priori, mais ne tient pas compte des combinaisons linéaires de ces fréquences ni de l'évolution globale de leurs tendances. On suit en général la tendance de l'énergie des canaux fréquentiels du défaut mais on ne tient pas compte de l'évolution de l'énergie des harmoniques associées et du nombre d'harmoniques ayant une énergie significative.

La présente invention a alors pour but de proposer un procédé alternatif et un dispositif alternatif visant à améliorer la détection de l'apparition ou de la présence d'un défaut sur un système mécanique comportant au moins un organe tournant.

La présente invention a par exemple pour objet un procédé de détection d'un défaut sur un système mécanique, le système mécanique comportant au moins un organe tournant en rotation autour d'un axe AX de rotation ainsi qu'un capteur vibratoire émettant un signal vibratoire temporel, un capteur angulaire émettant un signal angulaire temporel variant en fonction d'une position angulaire de l'organe tournant autour de l'axe AX de rotation et un calculateur.

Le ou les capteurs vibratoires permettent ainsi de mesurer des caractéristiques, telles des vibrations par exemple, du système mécanique dans son ensemble ou d'un ou de plusieurs de ses composants et d'émettre un signal vibratoire temporel $x(t)$, à savoir dans le domaine temporel, porteur d'une information relative à ces caractéristiques, vers le calculateur par exemple. Le capteur angulaire permet de mesurer une position angulaire de l'organe tournant autour de l'axe AX de rotation, par rapport à une référence du système mécanique, par exemple un bâti ou un carter du système mécanique, et d'émettre un signal angulaire temporel $\theta(t)$, à savoir dans le domaine temporel, porteur d'une information relative à cette position angulaire.

**Un tel système** mécanique peut comporter au moins un des éléments suivants : au moins un organe tournant tel un arbre d'entrée et/ou un arbre de sortie, un palier de guidage en rotation et par exemple un roulement muni d'éléments roulants, une roue dentée, un pignon, une couronne dentée. Un tel système mécanique peut par exemple être une boîte de vitesse ou une boîte de transmission de puissance d'un véhicule.

Le procédé selon l'invention comporte les étapes suivantes :

- un traitement de signaux vibratoires temporels $x_m(t)$ émis par le capteur vibratoire comportant les sous-étapes suivantes :

  ○ émission de M signaux vibratoires temporels $x_m(t)$ par le capteur vibratoire, M étant supérieur ou égal à 2, m étant un nombre entier positif variant de 1 à $M$, « $t$ » étant la durée de fonctionnement du système mécanique,
  ○ première transformation, avec le calculateur, des M signaux vibratoires temporels $x_m(t)$ en M signaux vibratoires angulaires $x_m(\theta)$ en fonction du signal angulaire temporel $\theta_m(t)$, « $\theta$ » étant un angle de l'organe tournant autour de l'axe AX de rotation,
  ○ deuxième transformation, avec le calculateur, des M signaux vibratoires angulaires $x_m(\theta)$ en M signaux vibratoires fréquentiels $x_m(f_\theta)$ par un opérateur fréquentiel $\vartheta$, où « $f_\theta$ » est un canal fréquentiel,
  ○ première détermination de canaux fréquentiels de tendance $f_t$ en fonction des M signaux vibratoires fréquentiels $x_m(f_\theta)$, un canal fréquentiel de tendance $f_t$ étant un canal fréquentiel $f_\theta$ pour lequel les M signaux vibratoires fréquentiels $x_m(f_\theta)$ répondent à un critère de sélection relatif à une tendance de croissance,

- analyse, avec le calculateur, des canaux fréquentiels de tendance $f_t$ comportant les sous-étapes suivantes :

  ○ **comparaison** de chaque canal fréquentiel de tendance $f_t$ avec des combinaisons linéaires de fréquences de défaut $f_d$ relatives au défaut recherché, les combinaisons linéaires comportant respectivement des sommes de plusieurs des fréquences de défaut $f_d$ multipliées par des coefficients $n_i$ entiers,
  ○ seconde détermination de canaux fréquentiels de défaut $f_x$ en fonction de la comparaison, un canal fréquentiel de défaut $f_x$ étant un canal fréquentiel de tendance $f_t$ dont les différences avec les combinaisons linéaires sont inférieures à un seuil de comparaison,

- calcul, avec le calculateur, d'un indicateur de présence $I_{optimal}$ du défaut sur le système mécanique en fonction du nombre des canaux fréquentiels de défaut $f_x$ et du nombre des combinaisons linéaires des fréquences de défaut $f_d$,
- déclenchement d'une alerte de présence d'un défaut en fonction d'une comparaison entre l'indicateur de présence $I_{optimal}$ du défaut et un seuil de présence d'un défaut.

Un capteur vibratoire, dans le cadre de l'invention, peut comporter par exemple un accéléromètre, un tachymètre, un capteur de type codeur mesurant une position angulaire d'un arbre, une jauge de contrainte ou autres. Un tel capteur vibratoire permet de mesurer des signaux vibratoires temporels, comportant par exemple des signaux d'accélérations ou des signaux de vitesses. Un tel capteur vibratoire peut être positionné à différentes positions dans le système mécanique et avec des orientations diverses. Un tel capteur vibratoire peut être positionné de préférence sur ou à proximité d'un organe tournant, par exemple d'un arbre d'entrée ou de sortie, ou d'un élément spécifique à surveiller, tel qu'un palier, une roue dentée, un pignon ou une couronne dentée par exemple. Le capteur vibratoire peut ainsi émettre un signal angulaire temporel porteur d'une information relative aux vibrations captées au cours du temps.

On entend par « position » l'endroit où est agencé le capteur vibratoire sur le système mécanique. On entend par « orientation » les angles d'une ou de plusieurs directions privilégiées de mesure du capteur vibratoire.

Le capteur angulaire peut quant à lui être positionné à proximité de l'organe tournant dont il doit mesurer la position angulaire. Le capteur angulaire peut ainsi émettre un signal angulaire temporel porteur d'une information relative à la variation de cette position angulaire au cours du temps.

Le signal vibratoire temporel et le signal angulaire temporel peuvent être des signaux formés par des mesures brutes émises respectivement par le capteur vibratoire et le capteur angulaire ou par des mesures obtenues par un traitement de signal plus ou moins complexe effectué par le calculateur ou par un calculateur intégré au capteur correspondant à partir de telles mesures brutes, par exemple via un filtrage ou un échantillonnage usuel, voir l'application de transformations.

Le signal vibratoire temporel et le signal angulaire temporel peuvent être générés simultanément, voire de façon synchronisée.

Ainsi, le capteur vibratoire émet M signaux vibratoires temporels $x_m(t)$ pendant une durée prédéterminée de fonctionnement du système mécanique. Les signaux vibratoires temporels $x_m(t)$ sont généralement émis à intervalles réguliers sensiblement égaux et comportent chacun une information relative aux vibrations subies par une partie ou l'ensemble du système mécanique pendant une durée de mesure $T_f$ prédéfinie du système mécanique. Cette durée de mesure $T_f$ peut être égale à plusieurs secondes, voire quelques minutes et couvrir plusieurs cycles de fonctionnement du système mécanique, par exemple dix cycles de rotation de l'organe tournant autour de l'axe AX de rotation, l'angle $\theta$ de l'organe tournant étant dans ce cas égal à 3600°. Toutefois, des signaux vibratoires temporels $x_m(t)$ peuvent aussi être émis avec des intervalles différents entre eux. Par exemple, un signal vibratoire temporel $x_m(t)$ peut être émis systématique après le démarrage du système mécanique, éventuellement une fois un régime de rotation stabilisé atteint.

Parallèlement, le capteur angulaire émet, pendant la durée prédéterminée, M signaux angulaires temporels $\theta(t)$ qui peuvent être associés et synchronisés avec les signaux vibratoires temporels $x_m(t)$.

Chaque signal vibratoire temporel $x_m(t)$ et chaque signal angulaire temporel $\theta_m(t)$ sont émis pendant une durée de mesure $T_f$ par exemple égale à quelques dizaines de secondes ou à quelques minutes. Les signaux vibratoires temporels $x_m(t)$ et les signaux angulaires temporels $\theta_m(t)$ peuvent être stockés dans une mémoire du calculateur ou dans une mémoire reliée au calculateur.

Ensuite, le calculateur applique deux transformations successives aux M signaux vibratoires temporels $x_m(t)$ afin de les transformer dans un premier temps, de façon usuelle, en M signaux vibratoires angulaires $x_m(\theta)$ puis de transformer, à l'aide d'un opérateur fréquentiel $\vartheta$, les M signaux vibratoires angulaires $x_m(\theta)$ en M signaux vibratoires fréquentiels $x_m(f_\theta)$. Chaque signal vibratoire fréquentiel $x_m(f_\theta)$ est donc issu d'un signal vibratoire temporel $x_m(t)$ et donc d'une mesure vibratoire effectuée sur le système mécanique. Les M signaux vibratoires fréquentiels $x_m(f_\theta)$ sont donc des signaux spectraux discrétisés selon la position angulaire $\theta$ de l'organe tournant et varient en fonction d'un canal fréquentiel $f_\theta$ qui est lié à cette position angulaire $\theta$. Les canaux fréquentiels $f_\theta$ sont donc relatifs aux positions angulaires de l'organe tournant et non relatifs au temps, comme une fréquence classiquement utilisée. On désigne par « canaux fréquentiels $f_\theta$ » les fréquences de ces signaux spectraux discrétisés.

Les signaux vibratoires angulaires $x_m(\theta)$ et les signaux vibratoires fréquentiels $x_m(f_\theta)$ peuvent être stockés dans la mémoire du calculateur ou dans la mémoire reliée au calculateur.

Un ou plusieurs canaux fréquentiels de tendance $f_t$ indiquant une tendance de croissance des M signaux vibratoires fréquentiels $x_m(f_\theta)$ sont ensuite déterminés selon un critère de sélection. Ainsi, les M signaux vibratoires fréquentiels $x_m(f_\theta)$ associés à un canal fréquentiel de tendance $f_t$ indiquent une tendance de croissance et satisfont à ce critère de sélection relatif à cette tendance de croissance. L'expression « les M signaux vibratoires fréquentiels $x_m(f_\theta)$ indiquent une tendance de croissance» signifie que, pour un même canal fréquentiel $f_\theta$, les amplitudes des M signaux

vibratoires fréquentiels $x_m(f_\theta)$ sont croissantes du premier signal vibratoire fréquentiel $x_1(f_\theta)$ vers le dernier signal vibratoire fréquentiel $x_m(f_\theta)$ selon une courbe dont une caractéristique peut être cette tendance de croissance.

Chaque canal fréquentiel de tendance $f_t$ est donc un canal fréquentiel $f_\theta$ dont les amplitudes $x_m(f_t)$ des signaux vibratoires fréquentiels $x_m(f_\theta)$ relatives à ce canal fréquentiel de tendance $f_t$ croissent au cours du fonctionnement du système mécanique. Chaque canal fréquentiel de tendance $f_t$ est donc un canal fréquentiel $f_\theta$ qui caractérise une augmentation des vibrations au cours du fonctionnement du système mécanique. Cette augmentation des vibrations peut ainsi caractériser potentiellement l'apparition, voire la présence, d'un défaut sur le système mécanique. Les canaux fréquentiels de tendance $f_t$ peuvent être stockés dans la mémoire du calculateur ou dans la mémoire reliée au calculateur.

Le calculateur analyse alors ces canaux fréquentiels de tendance $f_t$ en comparant chaque canal fréquentiel de tendance $f_t$ avec des combinaisons linéaires de fréquences de défaut $f_d$ relatives au défaut spécifique recherché, et détermine des canaux fréquentiels de défaut $f_x$ suite à cette comparaison. Les canaux fréquentiels de défaut $f_x$ peuvent être stockés dans la mémoire du calculateur ou dans la mémoire reliée au calculateur.

Les fréquences de défaut $f_d$ relatives au défaut recherché sont connues et définies préalablement par retour d'expériences, par essais, voire par simulations. Les fréquences de défaut $f_d$ peuvent avoir été stockées préalablement dans la mémoire du calculateur ou dans la mémoire reliée au calculateur. En effet, un défaut sur un système mécanique génère souvent des modulations d'amplitude et de fréquence sur les vibrations de ce système mécanique et donne lieu à un ensemble de canaux fréquentiels excités dont la fréquence peut s'exprimer comme une combinaison linéaire de la ou des fréquences de défaut $f_d$.

Chaque fréquence de défaut $f_d$ a par exemple été identifiée sur un système mécanique présentant le défaut recherché et pour laquelle les amplitudes de signaux vibratoires mesurés sont importantes. La ou les fréquences de défaut $f_d$ associé à un défaut spécifique recherché peuvent être contenues dans un modèle de défaut. De la sorte, plusieurs modèles de défaut peuvent exister, permettant de caractériser respectivement différents types de défauts susceptibles d'apparaître sur le système mécanique.

En outre, un modèle de défaut peut être paramétrique. Les fréquences de défaut $f_d$ associées au défaut considéré peuvent alors être variables en fonction de paramètres de fonctionnement du système mécanique, tels que la phase de fonctionnement du système mécanique, et/ou le couple d'un organe tournant, ou encore la température à l'intérieur du système mécanique par exemple. Les fréquences de défaut $f_d$ peuvent aussi être variables en fonction de paramètres extérieurs au système mécanique, tels que la température par exemple.

Chaque combinaison linéaire comporte une somme de plusieurs de ces fréquences de défaut $f_d$ multipliées par des coefficients $n_i$ entiers. L'utilisation de ces combinaisons linéaires permet donc de comparer les canaux fréquentiels de tendance $f_t$ avec les fréquences de défaut $f_d$ connues ainsi qu'avec certaines de leurs fréquences harmoniques, selon les coefficients $n_i$ utilisés.

Un canal fréquentiel de défaut $f_x$ est ainsi déterminé et égal à un canal fréquentiel de tendance $f_t$ dont les différences avec les combinaisons linéaires sont inférieures à un seuil de comparaison, voire nulles. On sélectionne de la sorte les canaux fréquentiels de tendance $f_t$ qui sont des combinaisons linéaires ou « presque » des combinaisons linéaires des fréquences de défaut $f_d$ du modèle de défaut relatif au défaut recherché.

Un ou plusieurs canaux fréquentiels de défaut $f_x$ peuvent ainsi être déterminés égaux respectivement à un ou plusieurs canaux fréquentiels de défaut $f_t$ lorsque ceux-ci coïncident, au seuil de comparaison près, à une fréquence de défaut $f_d$, à une de ses fréquences harmoniques ou à des combinaisons linéaires de ces fréquences de défaut $f_d$. Le seuil de comparaison peut avoir été stocké préalablement dans la mémoire.

La détermination d'un ou de plusieurs canaux fréquentiels de défaut $f_x$ caractérise ainsi un risque de présence d'un défaut sur le système mécanique.

Pour confirmer ce risque, le calculateur calcule un indicateur de présence $I_{optimal}$ caractérisant ce risque de présence d'un défaut sur le système mécanique en fonction du nombre des canaux fréquentiels de défaut $f_x$ et du nombre des combinaisons linéaires des fréquences de défaut $f_d$. Cet indicateur de présence $I_{optimal}$ peut ensuite être comparé à un seuil de présence d'un défaut pour confirmer ou infirmer ce risque. Le seuil de présence d'un défaut peut avoir été stocké préalablement dans la mémoire.

Ainsi, une alerte de présence d'un défaut est déclenchée en fonction d'une comparaison entre l'indicateur de présence $I_{optimal}$ du défaut et le seuil de présence d'un défaut. Cette alerte de présence d'un défaut peut être déclenchée par un générateur d'alerte. Cette alerte de présence d'un défaut peut être visuelle, sonore et/ou haptique par exemple.

Le procédé selon l'invention permet ainsi de déterminer de façon fiable une détection de l'apparition d'un défaut sur le système mécanique ou sa présence dès que des canaux fréquentiels présentent une tendance de croissance significative, en identifiant ces canaux fréquentiels, puis en les comparant avec des combinaisons linéaires de fréquences de défaut $f_d$ connues et associées au défaut recherché. En conséquence, la détection de ce défaut peut être anticipée, permettant de traiter ce défaut au plus tôt, évitant ainsi pour un aéronef les risques d'interruption ou d'annulation de vol d'un aéronef, d'atterrissage d'urgence, voire d'accident.

Le procédé selon l'invention peut comporter une ou plusieurs des caractéristiques qui suivent, prises seules ou en combinaison.

Selon un exemple, le seuil de comparaison peut être prédéterminé et peut par exemple être égal à une résolution fréquentielle associée aux signaux vibratoires fréquentiels discrétisés.

Selon un autre exemple compatible avec les précédents, la durée prédéterminée pendant laquelle le capteur vibratoire émet les M signaux vibratoires temporels $x_m(t)$ peut être glissante.

De la sorte, lorsque le capteur vibratoire émet un (M+1)ème signal vibratoire temporel $x_{M+1}(t)$, le procédé est alors appliqué à M signaux vibratoires temporels $x_m(t)$, m étant compris entre 2 et M+1. Le (M+1)ème signal vibratoire temporel $x_{M+1}(t)$ est par exemple stocké dans la mémoire et le premier signal vibratoire temporel $x_1(t)$ peut éventuellement être supprimé de la mémoire.

La durée prédéterminée peut être par exemple égale à plusieurs heures, voire plusieurs jours de fonctionnement selon le système mécanique concerné. L'intervalle entre deux signaux vibratoires temporels peut être par exemple égal à quelques dizaines de minutes ou plusieurs heures de fonctionnement de ce système mécanique.

Selon un autre exemple compatible avec les précédents, un nombre des coefficients $n_i$ entiers peut être limité, et en conséquence les valeurs des coefficients $n_i$ entiers peuvent être bornées.

En effet, plus la valeur des coefficients $n_i$ est élevée, plus le risque que des canaux fréquentiels répondant au critère des canaux fréquentiels de défaut $f_x$ soient confondus avec d'autres phénomènes physiques du système augmente et, de fait, le risque de détection de faux défauts augmente également.

Un nombre limité des coefficients $n_i$ permet aussi de limiter le nombre de combinaisons linéaires et, par suite le temps de calcul des canaux fréquentiels de défaut $f_x$.

Selon un autre exemple compatible avec les précédents, l'indicateur de présence $I_{optimal}$ du défaut peut augmenter lorsque le nombre des canaux fréquentiels de défaut $f_x$ augmente et l'alerte de présence d'un défaut peut être déclenchée si l'indicateur de présence $I_{optimal}$ est supérieur au seuil de présence d'un défaut.

Par exemple, l'indicateur de présence $I_{optimal}$ du défaut peut être égal à un rapport d'un nombre des canaux fréquentiels de défaut $f_x$ par un nombre total de combinaisons linéaires des fréquences de défaut $f_d$ et l'alerte de présence d'un défaut peut être déclenchée si l'indicateur de présence $I_{optimal}$ est supérieur au seuil de présence d'un défaut.

L'indicateur de présence $I_{optimal}$ est ainsi normalisé et compris entre 0 et 1.

Selon un autre exemple compatible avec les précédents, la première détermination des canaux fréquentiels de tendance $f_t$ peut comporter les sous-étapes suivantes :

- génération, avec le calculateur, d'au moins une série d'amplitudes $X_{f_\theta}$ associée à un canal fréquentiel $f_\theta$ et comportant M valeurs d'amplitudes appartenant respectivement aux M signaux vibratoires fréquentiels et relatives au canal fréquentiel $f_\theta$, le nombre des séries d'amplitudes $X_{f_\theta}$ étant égal au nombre de canaux fréquentiels $f_\theta$,
- calcul, avec le calculateur, d'un indicateur de tendance $I_{trend}(f_\theta)$ pour chaque canal fréquentiel $f_\theta$ en fonction de la série d'amplitudes associée au canal fréquentiel $f_\theta$, et
- première détermination, avec le calculateur, de canaux fréquentiels de tendance $f_t$, chaque canal fréquentiel de tendance $f_t$ étant un canal fréquentiel $f_\theta$ répondant au critère de sélection, ce critère de sélection étant alors relatif à l'indicateur de tendance $I_{trend}(f_\theta)$.

Chaque série d'amplitudes $X_{f_\theta}$ comporte ainsi autant de valeurs d'amplitudes que de signaux vibratoires temporels ont été émis sur la durée prédéterminée. Chaque série d'amplitudes $X_{f_\theta}$ caractérise ainsi les « niveaux d'énergie » associés au canal fréquentiel $f_\theta$ auquel est associée cette série d'amplitudes $X_{f_\theta}$. Deux séries d'amplitudes $X_{f_\theta}$ distinctes sont associées respectivement à deux canaux fréquentiels $f_\theta$ distincts.

La première détermination permet alors d'identifier, parmi les canaux fréquentiels $f_\theta$, les canaux fréquentiels de tendance $f_t$ pour lesquels ces niveaux d'énergie sont croissants de façon significative au cours de la durée prédéterminée. En effet, un indicateur de tendance $I_{trend}(f_\theta)$ traduisant la tendance de croissance de canaux fréquentiels de tendance $f_t$, répond et satisfait au critère de sélection, et peut traduire l'apparition du défaut considéré.

En effet pour la quasi-totalité des défauts, les niveaux d'énergie des canaux fréquentiels associés à un défaut croissent de façon lente pendant une longue durée à l'apparition du défaut puis croissent progressivement de façon plus rapide jusqu'à une rupture. Le but de l'indicateur de tendance est donc d'identifier les canaux fréquentiels qui sont dans la phase de croissance lente. Cela permet de les identifier bien avant que la rupture ne se produise.

Chaque canal fréquentiel de tendance $f_t$ est un canal fréquentiel $f_\theta$ répondant au critère de sélection, ce critère de sélection étant alors relatif à l'indicateur de tendance $I_{trend}(f_\theta)$.

Selon un premier critère de sélection, chaque canal fréquentiel de tendance $f_t$ est un canal fréquentiel $f_\theta$ pour lequel ledit indicateur de tendance $I_{trend}(f_\theta)$ est supérieur au seuil de tendance. Chaque canal fréquentiel de tendance $f_t$ est, selon ce premier critère de sélection, un canal fréquentiel $f_\theta$ dont les amplitudes $x_m(f_T)$ des signaux vibratoires fréquentiels $x_m(f_\theta)$ relatives à ce canal fréquentiel de tendance $f_t$ croissent au cours du fonctionnement du système mécanique plus rapidement que les amplitudes d'une courbe prédéterminée associée au seuil de tendance.

La première détermination permet alors d'identifier, parmi les canaux fréquentiels $f_\theta$, les canaux fréquentiels de tendance $f_t$ pour lesquels ces niveaux d'énergie sont croissants de façon significative au cours de la durée prédéterminée, pouvant traduire l'apparition du défaut considéré si une tendance de croissance de ces niveaux d'énergie est supérieure au seuil de tendance.

Selon un second critère de sélection, les canaux fréquentiels de tendance $f_t$ sont les P canaux fréquentiels $f_\theta$ correspondant aux P indicateurs de tendance $I_{trend}(f_\theta)$ les plus grands, P étant un nombre entier supérieur à un. P est par exemple égal à 5. Dans ce cas, les canaux fréquentiels de tendance $f_t$ sont par exemple les canaux fréquentiels $f_\theta$ dont les M signaux vibratoires temporels $x_m(t)$ sont caractérisés par les plus fortes croissances.

Chaque canal fréquentiel de tendance $f_t$ est, selon ce second critère de sélection, un canal fréquentiel $f_\theta$ dont les amplitudes $x_m(f_t)$ des signaux vibratoires fréquentiels $x_m(f_\theta)$ relatives à ce canal fréquentiel de tendance $f_t$ croissent le plus rapidement au cours du fonctionnement du système mécanique. La première détermination permet alors d'identifier, parmi les canaux fréquentiels $f_\theta$, les canaux fréquentiels de tendance $f_t$, pour lesquels ces niveaux d'énergie croissent le plus rapidement au cours de la durée prédéterminée, et susceptibles de traduire l'apparition du défaut considéré.

Quel que soit le critère de sélection utilisé, chaque canal fréquentiel de tendance $f_t$ est donc un canal fréquentiel $f_\theta$ qui caractérise une augmentation des vibrations au cours du fonctionnement du système mécanique. Cette augmentation des vibrations peut ainsi caractériser potentiellement l'apparition, voire la présence, d'un défaut sur le système mécanique. Les canaux fréquentiels de tendance $f_t$ peuvent être stockés dans la mémoire du calculateur ou dans la mémoire reliée au calculateur.

Les premier et second critères de sélection peuvent être utilisés de façon indépendante ou bien de façon complémentaire, à savoir simultanément.

En outre, chaque valeur d'amplitude de ladite au moins une série d'amplitudes $X_{f_\theta}$ peut être associée à un instant $t_m$ d'un début d'émission du signal vibratoire temporel $x_m(t)$ dont est issue la valeur d'amplitude.

Alternativement, l'instant $t_m$ peut aussi correspondre à l'instant de début d'une mesure des vibrations subies par le système mécanique, le signal vibratoire temporel $x_m(t)$ étant porteur d'une information relative à ces vibrations. Le début d'émission du signal vibratoire temporel $x_m(t)$ et le début d'une mesure des vibrations subies par le système mécanique peuvent être sensiblement confondus et simultanés.

Par ailleurs, le calcul d'un indicateur de tendance $I_{trend}(f_\theta)$ peut comporter les sous-étapes suivantes :

- troisième transformation de ladite au moins une série d'amplitudes $X_{f_\theta}$ par une fonction de transformation $\Phi$ en au moins une série de tendance selon la relation $g_{f_\theta} = \phi(X_{f_\theta})$,
- construction d'au moins une droite de tendance à partir de ladite au moins une série de tendance par régression linéaire, selon la relation $h_{f_\theta}(r) = A_{f_\theta} \times r + B_{f_\theta}$,
  où « $r$ » est une variable,

  « $h_{f_\theta}(r)$ » est une droite de tendance,
  « $A_{f_\theta}$ » est un coefficient directeur de la droite de tendance,
  « $B_{f_\theta}$ » est une ordonnée à l'origine de la droite de tendance,

- estimation d'un coefficient de bruit $\sigma_r$ pour chaque droite de tendance $h_{f_\theta}(r)$, selon la relation

$$\sigma_r(f_\theta) = \left| \frac{1}{M} \sum_{m=}^{M} \left( g_{f_\theta} - \left( A_{f_\theta} \times r + B_{f_\theta} \right) \right)^2 \right|^{1/2},$$

où « $\sum_{m=}^{M}$ » est la fonction somme avec m variant de 1 à M,
« $| \ |$ » est la fonction valeur absolue,
- calcul de l'indicateur de tendance $I_{trend}$ en fonction du coefficient de bruit relatif à la droite de tendance pour chaque canal fréquentiel $f_\theta$, selon la relation

$$I_{trend}(f_\theta) = \frac{A_{f_\theta}}{\alpha + \beta \times \sigma_r(f_\theta)},$$

où « $\alpha$ » et « $\beta$ » sont des paramètres prédéterminés.

L'indicateur de tendance $I_{trend}$ est ainsi calculé comme un rapport entre la pente de la régression linéaire et le niveau du bruit.

Les paramètres $\alpha$ et $\beta$ permettent de pondérer la sensibilité au bruit, à savoir l'influence de ce bruit.

Les paramètres $\alpha$ et $\beta$ peuvent être spécifiques à chaque défaut recherché.

La fonction de transformation $\Phi$ peut par exemple être la fonction unité ou la fonction logarithme ou une autre fonction mathématique. Le but de cette troisième transformation est d'obtenir une évolution globalement linéaire des valeurs d'amplitudes après application de la fonction de transformation $\Phi$ pendant la phase de croissance lente de ces valeurs d'amplitudes en cas d'apparition d'un défaut. Le choix de la fonction $\Phi$ permet notamment d'obtenir une bonne sensibilité soit en début soit en fin de propagation du défaut. La construction d'une droite de tendance par régression linéaire est alors plus précise et plus fiable pour obtenir une pente d'évolution et une estimation du coefficient de bruit $\sigma_r$ et ensuite pour construire un indicateur de tendance $I_{trend}$ robuste et simple.

Alternativement, des transformations conduisant à obtenir une courbe d'évolution caractéristique liée à la nature d'évolution des valeurs d'amplitudes associées aux canaux fréquentiels du défaut recherché peuvent être utilisées. Cette courbe d'évolution caractéristique peut être approchée à l'aide de méthodes d'ajustement de courbe par une expression paramétrique réduite, propre à cette courbe caractéristique d'évolution. Ainsi, les paramètres de la courbe d'évolution caractéristique et l'estimation du coefficient de bruit permettraient également de construire un indicateur de tendance $I_{trend}$ robuste pour identifier les canaux fréquentiels de tendance $f_t$.

Le procédé selon l'invention peut aussi comporter une étape de filtrage des signaux vibratoires afin de filtrer les signaux vibratoires, en particulier lorsque ces signaux vibratoires sont bruités. Cette étape de filtrage peut être appliquée aussi bien sur les signaux vibratoires temporels $x_m(t)$, les signaux vibratoires angulaires $x_m(\theta)$ ou les signaux vibratoires fréquentiels $x_m(f_\theta)$, que sur les séries d'amplitudes $X_{f_\theta}$. Cette étape de filtrage permet de lisser les signaux vibratoires et/ou les séries de façon usuelle en appliquant par exemple un filtrage médian ou d'autres filtres existants.

La présente invention vise également un programme d'ordinateur comprenant des instructions qui, lorsque le programme est exécuté, conduisent celui-ci à mettre en œuvre le procédé précédemment décrit. Le programme d'ordinateur peut par exemple être exécuté par un calculateur. Les instructions sont par exemple stockées dans une mémoire du calculateur ou reliée au calculateur.

La présente invention vise aussi un dispositif de surveillance pour surveiller un système mécanique et configuré pour la mise en œuvre du procédé précédemment décrit et ainsi pour détecter la présence d'un défaut sur un système mécanique comportant au moins un organe tournant en rotation autour d'un axe AX de rotation. Le dispositif de surveillance comporte au moins un capteur vibratoire émettant un signal vibratoire temporel, un capteur angulaire émettant un signal angulaire temporel variant en fonction d'une position angulaire de l'organe tournant autour de l'axe AX de rotation et un calculateur.

La présente invention vise encore un système mécanique comportant au moins un organe tournant en rotation autour d'un axe AX de rotation et un dispositif de surveillance tel que précédemment décrit pour surveiller le système mécanique et pour détecter la présence d'un défaut sur le système mécanique.

Ce système mécanique peut par exemple être une boîte de transmission de puissance d'un véhicule, et d'un aéronef en particulier.

La présente invention vise aussi une boîte de transmission de puissance comportant un tel système mécanique.

La présente invention peut enfin viser un aéronef comportant une telle boîte de transmission de puissance.

L'invention et ses avantages apparaîtront avec plus de détails dans le cadre de la description qui suit avec des exemples donnés à titre illustratif en référence aux figures annexées qui représentent :

- la figure 1, une vue schématique de côté d'un aéronef, et
- la figure 2, un schéma illustrant un procédé de détection d'un défaut sur un système mécanique.

Les éléments présents dans plusieurs figures distinctes sont affectés d'une seule et même référence.

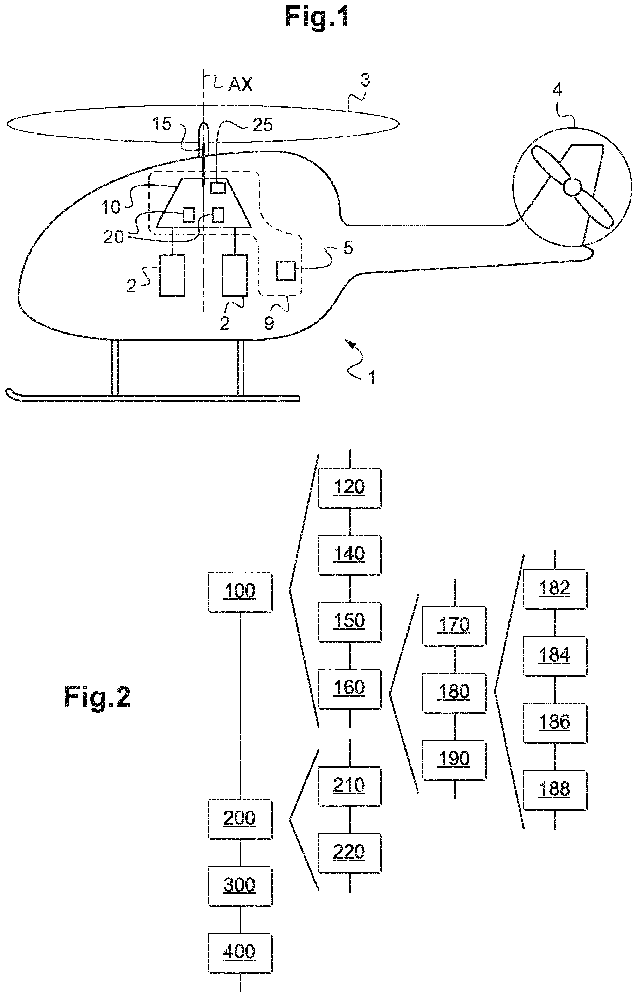

La figure 1 représente un véhicule 1, et un aéronef à voilure tournante de type giravion en particulier. Ce véhicule 1 comporte un système mécanique 10 muni d'un ou plusieurs organes tournants 15 tournant autour d'un axe AX de rotation. Un organe tournant 15 peut par exemple comporter un arbre de sortie ou un arbre d'entrée.

Un tel système mécanique 10 peut comporter un ou plusieurs paliers de guidage en rotation par exemple pour le guidage en rotation d'au moins un organe tournant. Un palier comporte par exemple un roulement muni d'éléments roulants.

Un tel système mécanique 10 peut aussi comporter par exemple au moins une roue dentée, un pignon, une couronne dentée, fixe ou mobile.

Ce système mécanique 10 peut être par exemple une boîte de vitesse ou une boîte de transmission de puissance de l'aéronef 1 à voilure tournante. Ce système mécanique 10 peut être relié par exemple à un ou plusieurs moteurs 2, via respectivement un ou plusieurs arbres d'entrées et peut entraîner en rotation un rotor, tel que par exemple un rotor principal 3 via un arbre de sortie, voire éventuellement un rotor auxiliaire 4 comme représenté sur la figure 1.

Alternativement, un tel système mécanique 10 peut être agencé dans une boîte de vitesse ou une boîte de transmission de puissance d'un véhicule 1 ou tout autre équipement mécanique.

Quel que soit son agencement, le système mécanique 10 comprend aussi un ou plusieurs capteurs vibratoires 20, un capteur angulaire 25 mesurant une position angulaire d'un organe tournant 15 autour d'un axe AX de rotation et un calculateur 5. Le système mécanique 10 peut comporter plusieurs capteurs angulaires 25 agencés respectivement sur plusieurs organes tournants 15 distincts.

Chaque capteur vibratoire 20 peut mesurer et/ou émettre un signal vibratoire temporel relatif à un comportement vibratoire du système mécanique 10 dans son ensemble, ou à un comportement vibratoire particulier d'un organe tournant 15, d'un palier ou encore d'un engrenage par exemple. Le signal vibratoire temporel est porteur d'informations relatives aux vibrations du système mécanique 10 ou d'un de ses composants. Le ou les capteurs vibratoires 20 peuvent comporter par exemple un accéléromètre, un tachymètre, un capteur de type codeur et/ou une jauge de contrainte.

Le capteur angulaire 25 mesure une position angulaire d'un organe tournant 15 autour d'un axe AX de rotation. La position angulaire de l'organe tournant 15 autour d'un axe AX de rotation peut être définie par rapport à un référentiel du système mécanique 10, par exemple un carter du système mécanique 10. Le signal temporel peut être porteur, d'informations relatives à la position angulaire d'un organe tournant 15 autour d'un axe AX de rotation.

Le capteur angulaire 25 peut comporter un capteur de position angulaire mesurant directement un signal temporel indiquant la variation de la position angulaire de l'organe tournant 15 en fonction du temps.

Alternativement, le capteur angulaire 25 peut comporter un capteur de vitesse angulaire ou un capteur d'accélération angulaire mesurant un signal temporel relatif respectivement à une vitesse angulaire ou à une accélération angulaire devant subir une simple intégration ou une double intégration, afin de générer un signal temporel fournissant la variation de la position angulaire de l'organe tournant 15 en fonction du temps. Cette simple ou double intégration peut être exécutée par le calculateur 5. Cette simple ou double intégration peut aussi être exécutée par un calculateur intégré au capteur angulaire 25.

Le calculateur 5 peut comporter au moins un processeur et au moins une mémoire, au moins un circuit intégré, au moins un système programmable ou bien au moins un circuit logique, ces exemples ne limitant pas la portée donnée à l'expression « calculateur ». Le calculateur 5 peut aussi être relié à une mémoire par une liaison filaire ou une liaison sans fil.

La mémoire peut par exemple stocker des instructions ou algorithmes relatifs à la réalisation d'un procédé de détection de défaut sur le système mécanique 10 et un ou plusieurs seuils correspondant à ce procédé. La mémoire peut aussi stocker un programme d'ordinateur destiné à être exécuté par le calculateur 5 afin de mettre en œuvre le procédé de détection de défaut.

Le ou les capteurs vibratoires 20 ainsi que le capteur angulaire 25 et le calculateur 5 peuvent faire partie d'un dispositif de surveillance 9 du système mécanique 10 destiné à surveiller le système mécanique afin de détecter et d'identifier un risque d'apparition ou de présence d'un défaut susceptible de provoquer une panne ou un dysfonctionnement du système mécanique 10.

Le calculateur 5 peut être dédié au dispositif de surveillance 9 ou bien être partagé avec d'autres dispositifs de l'aéronef 1.

Le procédé de détection de défaut selon l'invention comporte quatre étapes principales comme représenté sur le schéma de la figure 2. Une première étape principale de traitement 100 traite les signaux vibratoires temporels $x_m(t)$ afin de déterminer des canaux fréquentiels de tendance $f_t$ susceptibles de correspondre à un défaut présent sur le système mécanique 10. Une seconde étape principale d'analyse 200 effectue une analyse de ces canaux fréquentiels de tendance $f_t$ pour identifier parmi eux des canaux fréquentiels de défaut $f_x$, correspondant au défaut recherché.

Ensuite, une troisième étape principale de calcul 300 permet le calcul d'un indicateur de présence $I_{optimal}$ du défaut recherché sur le système mécanique 10 et une quatrième étape principale de déclenchement 400 effectue le déclenchement d'une alerte de présence d'un défaut en fonction de cet indicateur de présence $I_{optimal}$ du défaut et d'un seuil de présence d'un défaut.

De la sorte, la détection d'un défaut sur le système mécanique 10 peut être anticipée de façon fiable dès les premiers signes de son apparition, la présence de ce défaut pouvant en effet être détectée au travers des vibrations de ce système mécanique 10.

La première étape principale de traitement 100 comporte plusieurs sous-étapes.

Ainsi, au cours d'une étape d'émission 120, M signaux vibratoires temporels $x_m(t)$ sont émis par le capteur vibratoire 20, par exemple sur une durée prédéterminée de fonctionnement du système mécanique 10. Cette durée prédéterminée peut être glissante. M est un nombre entier supérieur ou égal à 2, et m est un nombre entier variant de 1 à M identifiant le numéro du signal vibratoire temporel $x_m(t)$ et donc le numéro de la mesure des vibrations du système mécanique 10. « $t$ » est la durée de fonctionnement du système mécanique 10. La durée t de fonctionnement est considérée comme étant arrêtée lorsque le système mécanique 10 n'est pas en fonctionnement.

De préférence, les $M$ signaux vibratoires temporels $x_m(t)$ correspondent à des mesures vibratoires effectuées à des régimes de fonctionnent du système mécanique 10 sensiblement similaires et proches. Des régimes de fonctionnement sont considérés comme étant proches par exemple si les écarts de vitesses de rotation de l'organe tournant 15 sont inférieurs à 10 % et si et les écarts de couples de l'organe tournant 15 sont inférieurs à 30%.

Chaque signal vibratoire temporel $x_m(t)$ correspond à une mesure des vibrations du système mécanique 10 effectuée pendant une durée de mesure $T_f$, de préférence identique pour toutes les signaux vibratoires temporels $x_m(t)$.

Simultanément, M signaux angulaires temporels $\theta(t)$ sont émis par le capteur angulaire 25, « $\theta$ » étant un angle de l'organe tournant 15 autour de l'axe AX de rotation.

Les M signaux vibratoires temporels $x_m(t)$ et les M signaux angulaires temporels $\theta_m(t)$ sont transmis, sous la forme de signaux électriques ou optiques, analogiques ou numériques, par une liaison filaire ou sans fil, au calculateur 5.

Alternativement, le ou les capteurs vibratoires 20 et le capteur angulaire 25 peuvent transmettre de façon continue un signal vibratoire temporel $x(t)$ et un signal angulaire temporel $\theta(t)$ au calculateur 5 qui enregistre à intervalles réguliers les M signaux vibratoires temporels $x_m(t)$ et les M signaux angulaires temporels $\theta(t)$ dans la mémoire.

Ensuite, au cours d'une étape de première transformation 140, le calculateur 5 transforme, de façon connue, les M signaux vibratoires temporels $x_m(t)$ en M signaux vibratoires angulaires $x_m(\theta)$ en fonction du signal angulaire temporel $\theta$ $(t)$.

Cette transformation du signal vibratoire temporel $x_m(t)$ du domaine temporel au domaine angulaire permet avantageusement d'associer les variations du signal vibratoire angulaire aux positions angulaires de l'organe tournant 15, et donc à des positions des éléments du système mécanique 10. Cette étape de première transformation 140 permet donc un rééchantillonnage du signal vibratoire temporel $x_m(t)$ dans le domaine angulaire afin d'atténuer notamment l'effet des fluctuations de régime de rotation de l'organe tournant 15 sur les mesures vibratoires. En effet, la vitesse de rotation de l'organe tournant 15 n'est pas systématiquement constante, en particulier lors de phases transitoires, par exemple lors du démarrage du système mécanique 10 ou des changements de régimes et en cas de fortes sollicitations du système mécanique 10.

Puis, au cours d'une étape de deuxième transformation 150, le calculateur 5 transforme les M signaux vibratoires angulaires $x_m(\theta)$ en M signaux vibratoires fréquentiels $x_m(f_\theta)$ par un opérateur fréquentiel $\vartheta$. Cette deuxième transformation peut se formuler selon la relation $x_m(f_\theta) = \vartheta(x_m(\theta))$, où « $f_\theta$ » est un canal fréquentiel. Les canaux fréquentiels $f_\theta$ sont issus de la deuxième transformation à l'aide de l'opérateur fréquentiel $\vartheta$ à partir des M signaux vibratoires angulaires $x_m(\theta)$ fonction de l'angle $\theta$ de l'organe tournant 15 autour de l'axe AX de rotation.

Cette deuxième transformation du domaine angulaire au domaine fréquentiel permet avantageusement de mettre en évidence les niveaux d'énergie des canaux fréquentiels $f_\theta$ des vibrations du système mécanique 10.

L'opérateur fréquentiel $\vartheta$ peut être différent en fonction du défaut recherché. L'opérateur fréquentiel $\vartheta$ peut par exemple être une transformée de Fourier, un spectre d'enveloppe ou une autre transformation.

Enfin, au cours d'une première détermination 160, le calculateur 5 détermine des canaux fréquentiels de tendance $f_t$ en fonction des M signaux vibratoires fréquentiels $x_m(f_\theta)$, un canal fréquentiel de tendance $f_t$ étant un canal fréquentiel $f_\theta$ pour lequel les M signaux vibratoires fréquentiels $x_m(f_\theta)$ satisfont un critère de sélection relatif à une tendance de croissance. Un canal fréquentiel de tendance $f_t$ correspond par exemple à un canal fréquentiel $f_\theta$ pour lequel les niveaux d'énergie des vibrations du système mécanique 10 sont croissants et donc susceptibles de correspondre à l'apparition d'un défaut présent sur le système mécanique 10.

La première détermination 160 des canaux fréquentiels de tendance $f_t$ peut comporter plusieurs sous-étapes.

Au cours d'une sous-étape de génération 170, le calculateur 5 génère au moins une série d'amplitudes $X_{f_\theta}$ associée à un canal fréquentiel $f_\theta$ et comportant M valeurs d'amplitudes appartenant respectivement aux M signaux vibratoires fréquentiels et relatives à ce canal fréquentiel $f_\theta$. Le nombre des séries d'amplitudes $X_{f_\theta}$ est égal au nombre de canaux fréquentiels $f_\theta$. Les amplitudes de chaque série d'amplitudes $X_{f_\theta}$ caractérisent l'énergie de vibrations pour chacun des canaux fréquentiels $f_\theta$.

Chaque valeur d'amplitude des séries d'amplitudes $X_{f_\theta}$ peut être associée au numéro m relatif à chaque mesure vibratoire.

Alternativement, chaque valeur d'amplitude des séries d'amplitudes $X_{f_\theta}$ peut être associée à un instant $t_m$ d'un début d'émission du signal vibratoire temporel $x_m(t)$ dont est issue la valeur d'amplitude. Cette association est notamment intéressante lorsque les mesures vibratoires ne sont pas effectuées à intervalles réguliers, afin de prendre en compte les intervalles irréguliers entre deux mesures vibratoires.

En outre, une sous-étape de filtrage des valeurs d'amplitude des séries d'amplitudes $X_{f_\theta}$ peut être appliquée. Alternativement, une telle sous-étape de filtrage peut également être appliquée aux séries des signaux vibratoires temporels $x_m(t)$, aux séries des signaux vibratoires angulaires $x_m(\theta)$.

Ensuite, au cours d'une sous-étape de calcul 180, le calculateur 5 calcule un indicateur de tendance $I_{trend}(f_\theta)$ pour chaque canal fréquentiel $f_\theta$ en fonction de la série d'amplitudes associée au canal fréquentiel $f_\theta$.

Puis, au cours d'une sous-étape de première détermination 190, le calculateur 5 détermine des canaux fréquentiels de tendance $f_t$ en vérifiant, pour chaque canal fréquentiel $f_\theta$, si l'indicateur de tendance $I_{trend}(f_\theta)$ répond et satisfait au critère de sélection.

Par exemple, un premier critère de sélection peut comporter un seuil de tendance. Chaque canal fréquentiel de tendance $f_t$ est alors un canal fréquentiel $f_\theta$ pour lequel l'indicateur de tendance $I_{trend}(f_\theta)$ est supérieur au seuil de tendance. Un canal fréquentiel de tendance $f_t$ est donc le canal fréquentiel $f_\theta$ pour lequel la série d'amplitudes est globalement croissante lorsque m varie de 1 à M, et présentant donc une tendance croissante supérieure à une tendance prédéfinie et correspondant au seuil de tendance.

Selon un second critère de sélection, les canaux fréquentiels de tendance $f_t$ sont les P canaux fréquentiels $f_\theta$ dont les indicateurs de tendance $I_{trend}(f_\theta)$ sont les plus grands, P étant un nombre entier supérieur à un. Les canaux fréquentiels de tendance $f_t$ sont les canaux fréquentiels $f_\theta$ pour lesquels les séries d'amplitudes sont globalement croissantes lorsque m varie de 1 à M et qui comportent les M signaux vibratoires temporels $x_m(t)$ caractérisés par les plus fortes croissances de leurs niveaux d'énergie respectifs.

Un seul critère de sélection parmi les premier et second critères de sélection peut être utilisé.

Alternativement, les premier et second critères de sélection peut être utilisés simultanément et de façon complémentaire. Par exemple, lorsque le nombre de canaux fréquentiels $f_\theta$, dont l'indicateur de tendance $I_{trend}(f_\theta)$ est supérieur au seuil de tendance, est inférieur à P, alors uniquement ces canaux fréquentiels $f_\theta$, dont l'indicateur de tendance $I_{trend}(f_\theta)$ est supérieur au seuil de tendance, sont des canaux fréquentiels de tendance $f_t$. A contrario, lorsque le nombre de canaux fréquentiels $f_\theta$, dont l'indicateur de tendance $I_{trend}(f_\theta)$ est supérieur au seuil de tendance, est supérieur à P, alors uniquement les P canaux fréquentiels $f_\theta$, dont les indicateurs de tendance $I_{treng}(f_\theta)$ sont les plus grands, sont des canaux fréquentiels de tendance $f_t$.

En outre, le calcul 180 de l'indicateur de tendance $I_{trend}(f_\theta)$ peut se décomposer en plusieurs sous-étapes.

Au cours d'une sous-étape de troisième transformation 182, le calculateur 5 transforme chaque série d'amplitudes $X_{f_\theta}$ en une série de tendance à l'aide d'une fonction de transformation $\Phi$ selon la relation $g_{f_\theta} = \Phi(X_{f_\theta})$. La fonction de transformation $\Phi$ a pour but de linéariser tant que possible les valeurs d'amplitudes de chaque série d'amplitudes $X_{f_\theta}$ qui présentent une tendance de croissance cohérente avec le modèle de défaut. La fonction de transformation $\Phi$ peut être différente en fonction du défaut recherché. La fonction de transformation $\Phi$ peut par exemple être la fonction unité si le défaut a une croissance sensiblement « linéaire » ou la fonction logarithme si le défaut a une croissance sensiblement « exponentielle ».

Au cours d'une sous-étape de construction 184, le calculateur 5 construit une droite de tendance pour chaque série de tendance par régression linéaire, selon la relation $h_{f_\theta}(r) = A_{f_\theta} \times r + B_{f_\theta}$,

avec « $r$ », une variable,

    « $h_{f_\theta}(r)$ », une droite de tendance,
    « $A_{f_\theta}$ », un coefficient directeur de la droite de tendance,
    « $B_{f_\theta}$ », une ordonnée à l'origine de la droite de tendance.

Au cours d'une sous-étape d'estimation 186, le calculateur 5 estime un coefficient de bruit $\sigma_r$ pour chaque droite

$$\sigma_r(f_\theta) = \left| \frac{1}{M} \sum_{m=1}^{M} \left( g_{f_\theta} - \left( A_{f_\theta} \times r + B_{f_\theta} \right) \right)^2 \right|^{1/2} ,$$

de tendance $h_{f_\theta}(r)$, selon la relation

avec « $\sum_{m=1}^{M}$ », la fonction somme avec m variant de 1 à M,

« $|\ |$ », la fonction valeur absolue.

Au cours d'une sous-étape de calcul 188, le calculateur 5 calcule l'indicateur de tendance $I_{trend}$ en fonction du coefficient directeur $A_{f_\theta}$ de la droite de tendance $h_{f_\theta}(r)$ et du coefficient de bruit relatif à la droite de tendance pour chaque canal fréquentiel $f_\theta$, selon la relation

$$I_{trend}(f_\theta) = \frac{A_{f_\theta}}{\alpha + \beta \times \sigma_r(f_\theta)}.$$

Les paramètres $\alpha$ et $\beta$ sont des paramètres prédéterminés et permettent de pondérer la sensibilité au bruit. $\alpha$ permet notamment d'établir une borne supérieure de l'indicateur de tendance $I_{trend}$ afin de limiter sa divergence quand le bruit $\sigma_r(f_\theta)$ tend vers 0, alors que $\beta$ permet de régler sa sensibilité au bruit.

Les paramètres $\alpha$ et $\beta$ peuvent être spécifiques à chaque défaut recherché, mais communs à tous les canaux fréquentiels.

L'étape principale d'analyse 200 des canaux fréquentiels de tendance $f_t$ comporte les sous-étapes suivantes.

Au cours d'une étape de comparaison 210, le calculateur 5 compare chaque canal fréquentiel de tendance $f_t$ avec des combinaisons linéaires de fréquences de défaut $f_d$ relatives au défaut recherché. Les fréquences de défaut $f_d$ sont préalablement connues et contenues dans un modèle de défaut associé au défaut recherché. En effet, la plupart des défauts mécaniques génèrent sur un système mécanique 10 des modulations d'amplitudes et de fréquences des vibrations de ce système mécanique 10. Par conséquent, pour un défaut donné présent sur le système mécanique 10, des fréquences spécifiques, dites « fréquences de défaut $f_d$ » peuvent être excitées lors du fonctionnement du système mécanique 10, à savoir présenter des niveaux d'énergie qui suivent une « loi » de croissance cohérente avec le défaut recherché. De plus, ces fréquences de défaut $f_d$ varient peu en fonction des paramètres de fonctionnement de ce système mécanique 10, ces paramètres ayant une influence principalement sur l'amplitude du signal vibratoire pour ces fréquences de défaut $f_d$.

Des combinaisons linéaires de fréquences de défaut $f_d$ comportent respectivement des sommes de plusieurs, voire de toutes des fréquences de défaut $f_d$ multipliées par des coefficients $n_i$ entiers. Les valeurs des coefficients $n_i$ sont bornées et le nombre des coefficients $n_i$ entiers est limité. Les coefficients $n_i$ sont par exemple compris entre -4 et 4. Par suite, le nombre de ces combinaisons linéaires de fréquences de défaut $f_d$ est également limité.

Ces combinaisons linéaires des fréquences de défaut $f_d$ sont telles que :

$$\begin{cases} n_1 F_1 - \cdots n_i F_i \cdots - n_k F_k \\ N_{1\,min} < n_1 < N_{1\,max} \\ \vdots \\ N_{k\,min} < n_k < N_{k\,max} \\ \{n_1, \cdots, n_i, \cdots, n_k\} \in \mathbb{Z} \end{cases}$$

avec k, le nombre de fréquences de défaut $f_d$,

$F_1, \ldots, F_i, \ldots, F_k$, les *k* fréquences de défaut $f_d$ avec $1 \le i \le k$, $n_i$, un coefficient de la combinaison linéaire associé à la fréquence $F_i$

$N_{i\,min}$, une limite inférieure de $n_i$,

$N_{i\,max}$, une limite supérieure de $n_i$.

Puis, au cours d'une étape de seconde détermination 220, le calculateur 5 détermine des canaux fréquentiels de défaut $f_x$, en fonction de la comparaison des canaux fréquentiels de tendance $f_t$ avec des combinaisons linéaires des fréquences de défaut $f_d$. Un canal fréquentiel de défaut $f_x$ est ainsi déterminé égal à un canal fréquentiel de tendance $f_t$ dont les différences avec les combinaisons linéaires sont inférieures à un seuil de comparaison. Le seuil de comparaison est faible et par exemple égal à une résolution fréquentielle associée aux signaux vibratoires fréquentiels discrétisés.

Cette seconde détermination revient à rechercher parmi les canaux fréquentiels de tendance $f_t$ ceux permettant de minimiser les différences de chaque canal fréquentiel tendance $f_t$ avec ces combinaisons linéaires des fréquences de défaut $f_d$. A l'issue de ces comparaisons, on sélectionne les canaux fréquentiels de tendance $f_t$ pour lesquels le résultat de ces différences est une fréquence nulle ou quasi nulle soit inférieur au seuil de comparaison, comme étant les canaux fréquentiels de défaut $f_x$.

Cette seconde étape principale d'analyse 200 permet donc d'identifier des canaux fréquentiels de défaut $f_x$, pour lesquels leurs niveaux d'énergie ont une tendance croissante et qui correspondent à des fréquences caractéristiques du défaut recherché.

Au cours de l'étape principale de calcul 300, l'indicateur de présence $I_{optimal}$ du défaut sur le système mécanique 10 est calculé.

Par exemple, l'indicateur de présence $I_{optimal}$ peut être défini de sorte à augmenter lorsque le nombre des canaux fréquentiels de défaut $f_x$ augmente. L'alerte de présence d'un défaut est alors déclenchée si l'indicateur de présence $I_{optimal}$ est supérieur au seuil de présence d'un défaut.

Par exemple, l'indicateur de présence $I_{optimal}$ du défaut peut être égal à un rapport d'un nombre des canaux fréquentiels de défaut $f_x$ par un nombre total de combinaisons linéaires des fréquences de défaut $f_d$. L'alerte de présence d'un défaut est alors déclenchée si l'indicateur de présence $I_{optimal}$ est supérieur au seuil de présence d'un défaut.

Ainsi, l'indicateur de présence $I_{optimal}$ est normalisé, à savoir compris entre 0 et 1. De la sorte, un seuil de présence d'un défaut unique peut être applicable à la détection de plusieurs types de défaut différents susceptibles d'apparaître sur le système mécanique 10.

De plus, l'indicateur de présence $I_{optimal}$ est nul lorsqu'aucune des fréquences de défaut $f_d$ du modèle de défaut n'exprime de tendance croissante et n'a donc été identifiée parmi les canaux fréquentiels de tendance $f_t$. Inversement, l'indicateur de présence $I_{optimal}$ est égal à 1 lorsque toutes les fréquences de défaut $f_d$ du modèle de défaut expriment une tendance croissante.

En outre, plus le nombre des canaux fréquentiels de défaut $f_x$ est important, plus l'indicateur de présence $I_{optimal}$ est important. Ainsi plus, l'indicateur de présence $I_{optimal}$ est important, plus le risque de présence d'un défaut est grand, et plus on peut être confiant sur la présence du défaut.

Le procédé selon l'invention permet donc de déterminer un indicateur de présence $I_{optimal}$ qui est fiable, efficace et robuste pour la détection d'un défaut sur le système mécanique 10, dès les premiers signes d'apparition de ce défaut.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir des revendications.

**Revendications**

1. Procédé de détection d'un défaut sur un système mécanique (10), ledit système mécanique (10) comportant au moins un organe tournant (15) en rotation autour d'un axe (AX) de rotation ainsi qu'un capteur vibratoire (20) émettant un signal vibratoire temporel $x(t)$, un capteur angulaire (25) émettant un signal angulaire temporel $\theta(t)$ variant en fonction d'une position angulaire dudit organe tournant (15) autour dudit axe (AX) de rotation et un calculateur (5),

   ledit procédé comportant :

   - un traitement (100) de signaux vibratoires temporels $x_m(t)$ émis par ledit capteur vibratoire (20) comportant les sous-étapes suivantes :

      ∘ émission de M signaux vibratoires temporels $x_m(t)$ par ledit capteur vibratoire (20), M étant supérieur ou égal à 2, m étant un nombre entier positif variant de 1 à $M$, « t » étant la durée de fonctionnement dudit système mécanique (10),
      ∘ première transformation (140), avec ledit calculateur (5), desdits M signaux vibratoires temporels $x_m(t)$ en M signaux vibratoires angulaires $x_m(\theta)$ en fonction dudit signal angulaire temporel $\theta_m(t)$, « $\theta$ » étant un angle dudit organe tournant (15) autour dudit axe (AX) de rotation,
      ∘ deuxième transformation (150), avec ledit calculateur (5), desdits M signaux vibratoires angulaires $x_m(\theta)$ en M signaux vibratoires fréquentiels $x_m(f_\theta)$ par un opérateur fréquentiel $\vartheta$, où « $f_\theta$ » est un canal fréquentiel,

   **caractérisé en ce que** ledit traitement (100) de signaux vibratoires temporels $x_m(t)$ comporte la sous-étape suivante :

      ∘ première détermination (160) de canaux fréquentiels de tendance $f_t$ en fonction desdits M signaux vibratoires fréquentiels $x_m(f_\theta)$, un canal fréquentiel de tendance $f_t$ étant un canal fréquentiel $f_\theta$ pour lequel lesdits M signaux vibratoires fréquentiels $x_m(f_\theta)$ répondent à un critère de sélection relatif à une tendance de croissance,

   et que ledit procédé comporte les étapes suivantes :

   - analyse (200), avec ledit calculateur (5), desdits canaux fréquentiels de tendance $f_t$ comportant les sous-étapes suivantes :

      ∘ comparaison (210) de chaque canal fréquentiel de tendance $f_t$ avec des combinaisons linéaires de fréquences de défaut $f_d$ relatives audit défaut recherché, lesdites combinaisons linéaires comportant respectivement des sommes de plusieurs desdites fréquences de défaut $f_d$ multipliées par des coefficients $N_i$ entiers,
      ∘ seconde détermination (220) de canaux fréquentiels de défaut $f_x$, en fonction de ladite comparaison, un canal fréquentiel de défaut $f_x$ étant un canal fréquentiel de tendance $f_t$ dont les différences avec lesdites combinaisons linéaires sont inférieures à un seuil de comparaison,

   - calcul (300), avec ledit calculateur (5), d'un indicateur de présence $I_{optimal}$ dudit défaut sur le système mécanique (10) en fonction du nombre desdits canaux fréquentiels de défaut $f_x$ et du nombre desdites combinaisons linéaires desdites fréquences de défaut $f_d$,
   - déclenchement (400) d'une alerte de présence d'un défaut en fonction d'une comparaison entre ledit indicateur de présence $I_{optimal}$ dudit défaut et un seuil de présence d'un défaut.

2. Procédé selon la revendication 1,
   pour lequel ladite première détermination (160) des canaux fréquentiels de tendance $f_t$ comporte les sous-étapes suivantes :

      - génération (170), avec ledit calculateur (5), d'au moins une série d'amplitudes $X_{f_\theta}$ associée à un canal fréquentiel $f_\theta$ et comportant M valeurs d'amplitudes appartenant respectivement auxdits M signaux vibratoires fréquentiels et relatives audit canal fréquentiel $f_\theta$, le nombre desdites séries d'amplitudes $X_{f_\theta}$ étant égales au nombre de canaux fréquentiels $f_\theta$,
      - calcul (180), avec ledit calculateur (5), d'un indicateur de tendance $I_{trend}(f_\theta)$ pour chaque canal fréquentiel $f_\theta$ en

fonction de ladite série d'amplitudes associé audit canal fréquentiel $f_\theta$, et
- première détermination (190), avec ledit calculateur (5), de canaux fréquentiels de tendance $f_t$, chaque canal fréquentiel de tendance $f_t$ étant un canal fréquentiel $f_\theta$ répondant audit critère de sélection, ledit critère de sélection étant relatif audit indicateur de tendance $I_{trend}(f_\theta)$.

3. Procédé selon la revendication 2,
pour lequel selon ledit critère de sélection, chaque canal fréquentiel de tendance $f_t$ est un canal fréquentiel $f_\theta$ pour lequel ledit indicateur de tendance $I_{trend}(f_\theta)$ est supérieur audit seuil de tendance.

4. Procédé selon l'une quelconque des revendications 2 à 3,
pour lequel selon ledit critère de sélection, lesdits canaux fréquentiels de tendance $f_t$ sont les P canaux fréquentiels $f_\theta$ correspondant auxdits P indicateurs de tendance $I_{trend}(f_\theta)$ les plus grands, P étant un nombre entier supérieur à un.

5. Procédé selon l'une quelconque des revendications 2 à 4,
pour lequel chaque valeur d'amplitude de ladite au moins une série d'amplitudes $X_{f_\theta}$ est associée à un instant $t_m$ d'un début d'émission dudit signal vibratoire temporel $x_m(t)$ dont est issue ladite valeur d'amplitude.

6. Procédé selon l'une quelconque des revendications 2 à 5,
pour lequel ledit calcul (180) d'un indicateur de tendance $I_{trend}(f_\theta)$ comporte les sous-étapes suivantes :

- troisième transformation (182) de ladite au moins une série d'amplitudes $X_{f_\theta}$ par une fonction de transformation $\Phi$ en au moins une série de tendance selon la relation $g_{f_\theta} = \Phi(X_{f_\theta})$,
- construction (184) d'au moins une droite de tendance à partir de ladite au moins une série de tendance par régression linéaire, selon la relation $h_{f_\theta}(r) = A_{f_\theta} \times r + B_{f_\theta}$,
où « $r$ » est une variable,

« $h_{f_\theta}(r)$ » est une droite de tendance,
« $A_{f_\theta}$ » est un coefficient directeur de ladite droite de tendance,
« $B_{f_\theta}$ » est une ordonnée à l'origine de ladite droite de tendance,

- estimation (186) d'un coefficient de bruit $\sigma_r$ pour chaque droite de tendance $h_{f_\theta}(r)$, selon la relation

$$\sigma_r(f_\theta) = \left| \frac{1}{M} \sum_{m=1}^{M} \left( g_{f_\theta} - (A_{f_\theta} \times r + B_{f_\theta}))^2 \right|^{1/2},$$

où « $\sum_{m=1}^{M}$ » est la fonction somme avec m variant de 1 à M, « | | » est la fonction valeur absolue,
- calcul (188) dudit indicateur de tendance $I_{trend}$ en fonction dudit coefficient de bruit relatif à ladite droite de tendance pour chaque canal fréquentiel $f_\theta$, selon la relation $I_{trend}(f_\theta) = \frac{A_{f_\theta}}{\alpha + \beta \times \sigma_r(f_\theta)}$, où « $\alpha$ » et « $\beta$ » sont des paramètres prédéterminés.

7. Procédé selon la revendication 6,
pour lequel ladite fonction de transformation $\Phi$ est la fonction unité ou la fonction logarithme.

8. Procédé selon l'une quelconque des revendications 7 à 8,
pour lequel lesdits paramètres $\alpha$ et $\beta$ sont spécifiques à chaque défaut recherché.

9. Procédé selon l'une quelconque des revendications 1 à 9,
pour lequel ledit indicateur de présence $I_{optimal}$ dudit défaut augmente lorsque ledit nombre desdits canaux fréquentiels de défaut $f_x$ augmente et ladite alerte de présence d'un défaut est déclenchée si ledit indicateur de présence $I_{optimal}$ est supérieur audit seuil de présence d'un défaut.

10. Procédé selon l'une quelconque des revendications 1 à 9,
pour lequel un nombre desdits coefficients $N_i$ entiers est limité, et des valeurs desdits coefficients $N_i$ entiers sont bornées.

11. Procédé selon la revendication 10,

pour lequel ledit indicateur de présence $I_{optimal}$ dudit défaut est égal à un rapport d'un nombre desdits canaux fréquentiels de défaut $f_x$ par un nombre total de combinaisons linéaires desdites fréquences de défaut $f_d$ et ladite alerte de présence d'un défaut est déclenchée si ledit indicateur de présence $I_{optimal}$ est supérieur audit seuil de présence d'un défaut.

12. Procédé selon l'une quelconque des revendications 1 à 11,
pour lequel ledit seuil de comparaison est égal à une résolution fréquentielle associée auxdits signaux vibratoires fréquentiels discrétisés.

13. Procédé selon l'une quelconque des revendications 1 à 12,
pour lequel ledit au moins un capteur vibratoire (20) émet lesdits M signaux vibratoires temporels $x_m(t)$ pendant une durée prédéterminée glissante de fonctionnement dudit système mécanique (10).

14. Programme d'ordinateur comprenant des instructions qui, lorsque ledit programme est exécuté, conduisent à mettre en œuvre le procédé selon l'une quelconque des revendications 1 à 13,

15. Dispositif de surveillance (9) configuré pour surveiller un système mécanique (10), ledit système mécanique (10) comportant au moins un organe tournant (15) en rotation autour d'un axe (AX) de rotation, ledit dispositif de surveillance (9) comportant au moins un capteur vibratoire (20) émettant un signal vibratoire temporel, un capteur angulaire (25) émettant un signal angulaire temporel variant en fonction d'une position angulaire dudit organe tournant (15) autour dudit axe (AX) de rotation et un calculateur (5),
**caractérisé en ce que** ledit dispositif de surveillance (9) est configuré pour la mise en œuvre du procédé selon l'une quelconque des revendications 1 à 13.

16. Système mécanique (10) comportant au moins un organe tournant (15) en rotation autour d'un axe (AX) de rotation,
**caractérisé en ce que** ledit système mécanique (10) comporte un dispositif de surveillance (9) selon la revendication 15.

17. Boîte de transmission de puissance (6) comportant un système mécanique (10) selon la revendication 16.


**Patentansprüche**

1. Verfahren zur Erkennung eines Fehlers an einem mechanischen System (10), wobei das mechanische System (10) mindestens ein um eine Drehachse (AX) rotierendes Drehglied (15) sowie einen Vibrationssensor (20), der ein Zeitvibrationssignal x(t) aussendet, einen Winkelsensor (25), der ein Zeitwinkelsignal q(t) aussendet, das sich in Abhängigkeit von einer Winkelposition des Drehglieds (15) um die Drehachse (AX) ändert, und einen Rechner (5) umfasst,

wobei das Verfahren umfasst:

- Verarbeiten (100) von vom Vibrationssensor (20) ausgegebenen zeitlichen Vibrationssignalen $x_m(t)$ mit den folgend en Teilschritten:

Ausgeben von M Zeitvibrationssignalen $x_m(t)$ durch den Vibrationssensor (20), wobei M größer oder gleich 2 ist, m eine positive ganze Zahl ist, die von 1 bis M variiert, und "t" die Betriebszeit des mechanischen Systems (10) ist,
erstes Transformieren (140), mit dem Rechner (5), der M Zeitvibrationssignale $x_m(t)$ in M Winkelvibrationssignale $x_m(\theta)$ als Funktion des zeitlichen Winkelsignals $\theta_m(t)$, wobei "$\theta$" ein Winkel des Drehglieds (15) um die Drehachse (AX) ist,
zweites Transformieren (150), mit dem Rechner (5), der M Winkelvibrationssignale $x_m(\theta)$ in M Frequenzvibrationssignale $x_m(f_\theta)$ durch einen Frequenzoperator $\theta$, wobei "$f_\theta$" ein Frequenzkanal ist,

**dadurch gekennzeichnet, dass** das Verarbeiten (100) von zeitlichen Vibrationssignalen $x_m(t)$ den folgenden Unterschritt umfasst:

erstes Bestimmen (160) von Trendfrequenzkanälen $f_t$ in Abhängigkeit von den M Frequenzvibrationssignalen $x_m(f_\theta)$, wobei ein Trendfrequenzkanal $f_t$ ein Frequenzkanal $f_\theta$ ist, für den die M Frequenzvibrations-

signale $x_m(f_\theta)$ ein Auswahlkriterium in Bezug auf einen Wachstumstrend erfüllen,

und dass das Verfahren die folgenden Schritte umfasst:

- Analysieren (200), mit dem Rechner (5), der Trendfrequenzkanäle $f_t$, mit folgenden Teilschritten:

Vergleichen (210) jedes Trendfrequenzkanals $f_t$ mit Linearkombinationen von Fehlerfrequenzen $f_d$, die sich auf den gesuchten Fehler beziehen, wobei die Linearkombinationen jeweils Summen von mehreren der Fehlerfrequenzen $f_d$, multipliziert mit ganzzahligen Koeffizienten $N_i$, umfassen,
zweites Bestimmen (220) von Fehlerfrequenzkanälen $f_x$ in Abhängigkeit von dem Vergleichen, wobei ein Fehlerfrequenzkanal $f_x$ ein Trendfrequenzkanal $f_t$ ist, dessen Unterschiede zu den Linearkombinationen kleiner als ein Vergleichsschwellenwert sind,

- Berechnen (300), mit dem Rechner (5), eines Indikators $I_{optimal}$ für das Vorliegen des Fehlers auf dem mechanischen System (10) als Funktion der Anzahl der Fehlerfrequenzkanäle $f_x$ und der Anzahl der Linearkombinationen der Fehlerfrequenzen $f_d$,
- Auslösen (400) einer Warnung vor dem Vorliegen eines Fehlers in Abhängigkeit von einem Vergleich zwischen dem Indikator $I_{optimal}$ für das Vorliegen des Fehlers und einem Schwellenwert für das Vorliegen eines Fehlers.

2. Verfahren nach Anspruch 1,
bei dem das erste Bestimmen (160) der Trendfrequenzkanäle $f_t$ die Teilschritte umfasst:

- Erzeugen (170), mit dem Rechner (5), von mindestens einer Amplitudenreihe $X_{f\theta}$, die einem Frequenzkanal $f_\theta$ zugeordnet ist und M Amplitudenwerte umfasst, die jeweils zu den M Frequenzvibrationssignalen gehören und sich auf den Frequenzkanal $f_\theta$ beziehen, wobei die Anzahl der Amplitudenreihen $X_{f\theta}$ gleich der Anzahl der Frequenzkanäle $f_\theta$ ist,
- Berechnen (180), mit dem Rechner (5), eines Trendindikators $I_{trend}(f_\theta)$ für jeden Frequenzkanal $f_\theta$ als Funktion der dem Frequenzkanal $f_\theta$ zugeordneten Amplitudenreihe, und
- erstes Bestimmen (190), mit dem Rechner (5), von Trendfrequenzkanälen $f_t$, wobei jeder Trendfrequenzkanal $f_t$ ein Frequenzkanal $f_\theta$ ist, der das Auswahlkriterium erfüllt, wobei sich das Auswahlkriterium auf den Trendindikator $I_{trend}(f_\theta)$ bezieht.

3. Verfahren nach Anspruch 2,
bei dem gemäß dem Auswahlkriterium jeder Trendfrequenzkanal $f_t$ ein Frequenzkanal $f_\theta$ ist, bei dem der Trendindikator $I_{trend}(f_\theta)$ über dem Trendschwellenwert liegt.

4. Verfahren nach einem der Ansprüche 2 bis 3,
bei dem gemäß dem Auswahlkriterium die Trendfrequenzkanäle $f_t$ diejenigen P Frequenzkanäle $f_\theta$ sind, die den P größten Trendindikatoren $I_{trend}(f_\theta)$ entsprechen, wobei P eine ganze Zahl größer als eins ist.

5. Verfahren nach einem der Ansprüche 2 bis 4,
bei dem jeder Amplitudenwert der mindestens einen Amplitudenreihe $X_{f\theta}$ einem Zeitpunkt $t_m$ eines Sendebeginns des zeitlichen Vibrationssignals $x_m(t)$ zugeordnet ist, aus dem der Amplitudenwert stammt.

6. Verfahren nach einem der Ansprüche 2 bis 5,
bei dem die Berechnung (180) eines Trendindikators $I_{trend}(f_\theta)$ die folgenden Teilschritte umfasst:

- drittes Transformieren (182) der mindestens einen Amplitudenreihe $X_{f\theta}$ durch eine Transformationsfunktion $\Phi$ in mindestens eine Trendreihe gemäß der Beziehung

$$g_{f\theta} = \Phi(X_{f\theta}),$$

- Konstruieren (184) mindestens einer Trendgeraden aus der mindestens einen Trendreihe durch lineare Regression gemäß der Beziehung

$$h_{f_\theta}(r) = A_{f_\theta} \times r + B_{f_\theta},$$

wobei "r" eine Variable ist,
"$h_{f_\theta}(r)$" eine Trendgerade ist,
"$A_{f_\theta}$" ein Leitkoeffizient der genannten Trendgeraden ist,
"$B_{f_\theta}$" eine Ordinate am Ursprung der genannten Trendgeraden ist,

- Schätzen (186) eines Rauschkoeffizienten $\sigma_r$ für jede Trendgerade $h_{f_\theta}(r)$ gemäß der Beziehung

$$\sigma_r(f_\theta) = \left| \frac{1}{M} \sum_{m=1}^{M} \left( g_{f_\theta} - \left( A_{f_\theta} \times r + B_{f_\theta} \right) \right)^2 \right|^{1/2}$$

ist, wobei "$\sum_{m=1}^{M}$" die Summenfunktion ist und m von 1 bis $M$ variiert,
"| |" die Absolutwertfunktion ist,
- Berechnen (188) des Trendindikators $I_{trend}$ als Funktion des Rauschkoeffizienten bezüglich der Trendgeraden für jeden Frequenzkanal $f_\theta$ gemäß der Beziehung

$$I_{trend}(f_\theta) = \frac{A_{f_\theta}}{\alpha + \beta \times \sigma_r(f_\theta)},$$

wobei "$\alpha$" und "$\beta$" vorgegebene Parameter sind.

7. Verfahren nach Anspruch 6,
bei dem die besagte Transformationsfunktion $\Phi$ die Einheitsfunktion oder die Logarithmusfunktion ist.

8. Verfahren nach einem der Ansprüche 7 bis 8,
bei dem die Parameter "$\alpha$" und "$\beta$" für jeden gesuchten Fehler spezifisch sind.

9. Verfahren nach einem der Ansprüche 1 bis 9,
bei dem der Indikator $I_{optimal}$ für das Vorliegen des Fehlers zunimmt, wenn die Anzahl der Fehlerfrequenzkanäle $f_x$ zunimmt, und der Alarm für das Vorliegen eines Fehlers ausgelöst wird, wenn der Indikator $I_{optimal}$ für das Vorliegen größer als der Schwellenwert für das Vorliegen eines Fehlers ist.

10. Verfahren nach einem der Ansprüche 1 bis 9,
bei dem eine Anzahl der ganzzahligen Koeffizienten $N_i$ begrenzt ist und Werte der ganzzahligen Koeffizienten $N_i$ begrenzt sind.

11. Verfahren nach Anspruch 10,
bei dem der Indikator $I_{optimal}$ für das Vorliegen des Fehlers gleich einem Verhältnis einer Anzahl der Fehlerfrequenzkanäle $f_x$ zu einer Gesamtzahl von Linearkombinationen der Fehlerfrequenzen $f_d$ ist, und der Alarm für das Vorliegen eines Fehlers ausgelöst wird, wenn der Indikator $I_{optimal}$ für das Vorliegen eines Fehlers größer als der Schwellenwert für das Vorliegen eines Fehlers ist.

12. Verfahren nach einem der Ansprüche 1 bis 11,
bei dem der Vergleichsschwellenwert gleich einer mit den diskretisierten Frequenzvibrationssignalen verknüpften Frequenzauflösung ist.

13. Verfahren nach einem der Ansprüche 1 bis 12,
bei dem der mindestens eine Vibrationssensor (20) die M Zeitvibrationssignale $x_m(t)$ während einer vorgegebenen gleitenden Betriebszeit des mechanischen Systems (10) ausgibt.

14. Computerprogramm mit Anweisungen, die, wenn das Programm ausgeführt wird, dazu führen, dass das Verfahren nach einem der Ansprüche 1 bis 13 ausgeführt wird.

15. Überwachungsvorrichtung (9), die konfiguriert ist, um ein mechanisches System (10) zu überwachen, wobei das mechanische System (10) mindestens ein um eine Drehachse (AX) rotierendes Drehglied (15) umfasst, wobei die Überwachungsvorrichtung (9) mindestens einen Vibrationssensor (20), der ein Zeitvibrationssignal aussendet, einen Winkelsensor (25), der ein Zeitwinkelsignal aussendet, das sich in Abhängigkeit von einer Winkelposition des Drehglieds (15) um die Drehachse (AX) ändert, und einen Rechner (5) umfasst,

**dadurch gekennzeichnet, dass** die Überwachungsvorrichtung (9) für die Durchführung des Verfahrens nach einem der Ansprüche 1 bis 13 konfiguriert ist.

16. Mechanisches System (10) mit mindestens einem Drehglied (15), das um eine Drehachse (AX) rotiert,
**dadurch gekennzeichnet, dass** das mechanische System (10) eine Überwachungsvorrichtung (9) nach Anspruch 15 umfasst.

17. Getriebe zur Kraftübertragung (6) mit einem mechanischen System (10) nach Anspruch 16.

**Claims**

1. Method for detecting a fault in a mechanical system (10), said mechanical system (10) comprising at least one rotating member (15) rotating about an axis (AX) of rotation as well as a vibration sensor (20) emitting a temporal vibration signal x(t), an angular sensor (25) emitting a temporal angular signal $\theta(t)$ varying as a function of an angular position of said rotating member (15) about said axis (AX) of rotation and a calculator (5), said method including:

   - processing (100) temporal vibration signals $x_m(t)$ emitted by said vibration sensor (20) including the following sub-steps:

      o said vibration sensor (20) transmitting $M$ temporal vibration signals $x_m(t)$, Mbeing greater than or equal to 2, m being a positive integer varying from 1 to M, "t" being the operating time of said mechanical system (10), o first transformation (140), with said calculator (5), of said M temporal vibration signals $x_m(t)$ into $M$ angular vibration signals $\chi_m(\theta)$ as a function of said temporal angular signal $\theta_m(t)$, "$\theta$" being an angle of said rotating member (15) about said axis (AX) of rotation, second transformation (150), with said calculator (5), of said M angular vibration signals $x_m(\theta)$ into $M$ frequency vibration signals $x_m(f_\theta)$ by a frequency operator $\vartheta$, where "$f_\theta$" is a frequency channel,

      **characterized in that** said processing (100) of temporal vibration signals $x_m(t)$ includes the following sub-step:

      o first determination (160) of trend frequency channels $f_t$ as a function of said $M$ frequency vibration signals $\chi_m(f_\theta)$, a trend frequency channel $f_t$ being a frequency channel $f_\theta$ for which said $M$ frequency vibration signals $x_m(f_\theta)$ satisfy a selection criterion relating to a growth trend,

      and that said method includes the following steps:

      - analysis (200), with said calculator (5), of said trend frequency channels $f_t$ including the following sub-steps:

         o comparing (210) each trend frequency channel $f_t$ with linear combinations of fault frequencies $f_d$ relating to said sought fault, said linear combinations respectively comprising sums of a plurality of said fault frequencies $f_d$ multiplied by integer coefficients $Ni$,

            o second determination (220) of fault frequency channels $f_x$, as a function of said comparison, a fault frequency channel $f_x$ being a trend frequency channel $f_t$ whose differences with said linear combinations are less than a comparison threshold,

         - calculating (300), with said calculator (5), an indicator of the presence $I_{optimal}$ of said fault on the mechanical system (10) as a function of the number of said fault frequency channels $f_x$ and the number of said linear combinations of said fault frequencies $f_d$,
         - triggering (400) an alert of the presence of a fault as a function of a comparison between said indicator of the presence $I_{optimal}$ of said fault and a threshold of the presence of a fault.

2. Method according to Claim 1,
   for which said first determination (160) of the trend frequency channels $f_t$ includes the following sub-steps:

- generating (170), with said calculator (5), at least one series of amplitudes $X_{f\theta}$ associated with a frequency channel $f_\theta$ and comprising $M$ amplitude values belonging respectively to said $M$ frequency vibration signals and relating to said frequency channel $f_\theta$, the number of said series of amplitudes $X_{f\theta}$ being equal to the number of frequency channels $f_\theta$,

- calculating (180), with said calculator (5), a trend indicator $I_{trend}(f_\theta)$ for each frequency channel $f_\theta$ as a function of said series of amplitudes associated with said frequency channel $f_\theta$, and

- first determination (190), with said calculator (5), of trend frequency channels $f_t$, each trend frequency channel $f_t$ being a frequency channel $f_\theta$ satisfying said selection criterion, said selection criterion relating to said trend indicator $I_{trend}(f_\theta)$.

3. Method according to Claim 2,
for which according to said selection criterion, each trend frequency channel $f_t$ is a frequency channel $f_\theta$ for which said trend indicator $I_{trend}(f_\theta)$ is greater than said trend threshold.

4. Method according to any of Claims 2 - 3,
for which according to said selection criterion, said trend frequency channels $f_t$ are the P frequency channels $f_\theta$ corresponding to said largest P trend indicators $I_{trend}(f_\theta)$, P being an integer greater than one.

5. Method according to any of Claims 2 to 4,
for which each amplitude value of said at least one series of amplitudes $X\{_{f\theta}$ is associated with a moment $t_m$ of a start of emission of said temporal vibration signal $x_m(t)$ from which said amplitude value is derived.

6. Method according to one of Claims 2 to 5,

for which said calculation (180) of a trend indicator $I_{trend}(f_\theta)$ includes the following sub-steps:

- third transformation (182) of said at least one series of amplitudes $X_{f\theta}$ by a transformation function $\Phi$ into at least one series of trends according to the relationship $g_{f\theta} = \Phi(X_{f\theta})$,
- constructing (184) at least one trendline from said at least one series of trends by linear regression, according to the relationship $h_{f\theta}(r) = A_{f\theta} \times r + B_{f\theta}$, where "r" is a variable,

"$h_{f\theta}(r)$" is a trendline,
"$A_{f\theta}$" is a guiding coefficient of said trendline,
"$B_{f\theta}$" is an ordinate at the origin of said trendline,

- estimating (186) a noise coefficient $\sigma_r$ for each trendline $h_{f\theta}(r)$, according to the relationship $\sigma_r(f_\theta) = \left| \frac{1}{M} \sum_{m=1}^{M} \left( g_{f\theta} - (A_{f\theta} \times r + B_{f\theta}) \right)^2 \right|^{1/2}$,

where "$\sum_{m=1}^{M}$" is the sum function with m varying from 1 to M, "| |" is the absolute value function, - calculating (188) said trend indicator $I_{trend}$ according to said noise coefficient relating to said trendline for each frequency channel $f_\theta$, according to the relationship $I_{trend}(f_\theta) = \frac{A_{f\theta}}{\alpha + \beta \times \sigma_r(f_\theta)}$,
where "$\alpha$" and "$\beta$" are predetermined parameters.

7. Method according to Claim 6,
for which said transformation function $\Phi$ is the unit function or the logarithm function.

8. Method according to one of Claims 7 or 8,
for which said parameters $\alpha$ and $\beta$ are specific to each fault sought.

9. Method according to one of Claims 1 to 9,
for which said indicator of presence $I_{optimal}$ of said fault increases when said number of said fault frequency channels $f_x$ increases and said fault presence alert is triggered if said indicator of presence $I_{optimal}$ is greater than said threshold of the presence of a fault.

10. Method according to one of Claims 1 to 9,
for which a number of said integer coefficients $N_i$ is limited, and values of said integer coefficients $N_i$ are bounded.

11. Method according to Claim 10,
for which said indicator of presence $I_{optimal}$ of said fault is equal to a ratio of a number of said fault frequency channels $f_x$ to a total number of linear combinations of said fault frequencies $f_d$ and said fault presence alert is triggered if said indicator of presence $I_{optimal}$ is greater than said threshold of the presence of a fault.

12. Method according to one of Claims 1 to 11,
for which said comparison threshold is equal to a frequency resolution associated with said discretized frequency vibration signals.

13. Method according to one of Claims 1 to 12,
for which said at least one vibration sensor (20) emits said $M$ temporal vibration signals $x_m(t)$ during a predetermined sliding period of operation of said mechanical system (10).

14. Calculator program comprising instructions which, when said program is executed, lead to implementing the method according to one of Claims 1 to 13.

15. Monitoring device (9) configured to monitor a mechanical system (10), said mechanical system (10) comprising at least one rotating member (15) rotating about an axis (AX) of rotation, said monitoring device (9) comprising at least one vibration sensor (20) emitting a temporal vibration signal, an angular sensor (25) emitting a temporal angular signal varying as a function of an angular position of said rotating member (15) about said axis (AX) of rotation and a calculator (5),
**characterized in that** said monitoring device (9) is configured to implement the method according to one of Claims 1 to 13.

16. Mechanical system (10) comprising at least one rotating member (15) rotating around an axis (AX) of rotation, **characterized in that** said mechanical system (10) has a monitoring device (9) according to Claim 15.

17. Power transmission box (6) comprising a mechanical system (10) according to Claim 16.

# Fig.1

# Fig.2

**RÉFÉRENCES CITÉES DANS LA DESCRIPTION**

**Documents brevets cités dans la description**

- CN 102426102

- FR 3014502

**Littérature non-brevet citée dans la description**

- **SAMUEL P.D**. A Review of Vibration Based Technique for Helicopter Transmission Diagnostics. *Journal of sound and vibration*, 2005

- **MONICA TIBONI**. A Review on Vibration-Based Condition Monitoring of Rotating Machinery. Department of Mechanical and Industrial Engineering, University of Brescia, 2022
- **R.B. RANDALL**. Cepstrum Analysis and Gearbox Fault Diagnosis. Bruel & Kjaer